# EUROPÄISCHE PATENTSCHRIFT

(11) **EP 4 323 235 B1**
(45) Veröffentlichungstag und Bekanntmachung des Hinweises auf die Patenterteilung: **09.10.2024**
(21) Anmeldenummer: 22716364.9
(22) Anmeldetag: 17.03.2022
(51) Int. Cl.: B60N 2/90, B60N 3/00

(54) **UNTERSCHENKELSTÜTZE FÜR EINEN FAHRZEUGSITZ, FAHRZEUGSITZ EINES KRAFTFAHRZEUGS SOWIE KRAFTFAHRZEUG**
LOWER-LEG SUPPORT FOR A VEHICLE SEAT, VEHICLE SEAT OF A MOTOR VEHICLE, AND MOTOR VEHICLE
SUPPORT DE JAMBES POUR UN SIÈGE DE VÉHICULE, SIÈGE DE VÉHICULE D'UN VÉHICULE AUTOMOBILE ET VÉHICULE AUTOMOBILE

(30) Priorität: 13.04.2021 DE 102021001908
(43) Veröffentlichungstag der Anmeldung: 21.02.2024
(73) Patentinhaber: Mercedes-Benz Group AG, 70372 Stuttgart (DE)
(72) Erfinder: SCHMIDT, Bernd, 72218 Wildberg (DE); JOSHI, Tejas, PUNE 411044 (IN)
(74) Vertreter: Novagraaf Group
(86) Internationale Anmeldenummer: PCT/EP2022/057000
(87) Internationale Veröffentlichungsnummer: WO 2022/218637

(56) Entgegenhaltungen:
- DE-A1- 102019 126 180

## Beschreibung

Die Erfindung betrifft eine Unterschenkelstütze für einen Fahrzeugsitz gemäß dem Patentanspruch 1. Ferner betrifft die Erfindung einen eine Unterschenkelstütze aufweisenden Fahrzeugsitz gemäß dem Patentanspruch 8 sowie ein Kraftfahrzeug, mit Unterschenkelstütze und/oder Fahrzeugsitz, gemäß dem Patentanspruch 9. Kraftfahrzeuge, wie beispielsweise Personenkraftwagen, weisen einen Fahrzeuginnenraum auf. Die Mobilität der Menschen nimmt weiterhin zu. So entwickelt sich der Fahrzeuginnenraum immer mehr zu einem Lebensraum, das heißt, ein Fahrzeugbenutzer verbringt häufig mehr Zeit in dem Fahrzeuginnenraum und erledigt somit in dem Fahrzeuginnenraum immer mehr Aufgaben. Daher sollte der Fahrzeuginnenraum nach Möglichkeit einen besonders großen Komfort und/oder eine besonders große Flexibilität für verschiedenste Nutzungen bieten. Für eine Komfortverbesserung bei einem Fahrzeugsitz des Kraftfahrzeugs ist eine ausfahrbare Wadenauflage beziehungsweise Unterschenkelauflage sehr hilfreich.

So zeigt die DE 10 2010 030 553 A1 eine Unterschenkelstütze für einen Fahrzeugsitz. Diese Unterschenkelstütze weist ein Stützteil zum Abstützen des Unterschenkels eines Fahrzeuginsassen, ein Trägerelement und ein entlang einer ersten Verschieberichtung verschiebbar an dem Trägerelement angeordnetes, erstes Schubelement, das verschwenkbar mit dem Stützteil gekoppelt ist, auf.

Die DE 102019126180 zeigt einen Sitz bei dem ein Element wahlweise in die Position als Wadenstütze oder als Tischauflage bewegt werden kann.

Nachteilig beim genannten Stand der Technik ist beispielsweise eine fehlende Flexibilität der Unterschenkelstütze, beziehungsweise eine eingeschränkte Funktionalität.

Daher ist es Aufgabe der vorliegenden Erfindung, eine Unterschenkelstütze, einen Fahrzeugsitz sowie ein Kraftfahrzeug bereitzustellen, durch welche eine Unterschenkelstütze besonders flexibel einsetzbar ist und/oder eine besonders große Funktionalität bereitstellt.

Diese Aufgabe wird erfindungsgemäß durch die Gegenstände der unabhängigen Patentansprüche gelöst. Vorteile und vorteilhafte Ausgestaltungen der Erfindung sind Gegenstand der abhängigen Ansprüche und der Beschreibung.

Ein erster Aspekt der Erfindung betrifft eine Unterschenkelstütze für einen Fahrzeugsitz. Die erfindungsgemäße Unterschenkelstütze umfasst ein erstes Fixierelement und ein zweites Fixierelement, welche zum Fixieren der Unterschenkelstütze an gegenüberliegenden Seitenbereichen des Fahrzeugsitzes ausgebildet sind. Bei der Unterschenkelstütze ist ein erstes Verlagerungselement vorgesehen, welches drehbar mit dem ersten Fixierelement verbunden ist. Ferner ist ein zweites Verlagerungselement vorgesehen, welches fest mit dem zweiten Fixierelement verbunden ist. An einem in einer Gebrauchsposition dem ersten Fixierelement abgewandten Ende des ersten Verlagerungselements ist ein erstes, drehbar an diesem gehaltenes Stützelement vorgesehen, welches mittels einer Verriegelungseinrichtung mit einem zweiten, drehbar an einem in der Gebrauchsposition dem zweiten Fixierelement abgewandten Ende des zweiten Verlagerungselements angeordneten Stützelement aneinander verriegelbar ist. Die beiden Stützelemente sind, insbesondere gemeinsam, das heißt insbesondere wenn die Verriegelungseinrichtung geschlossen beziehungsweise verriegelt ist, aus der Gebrauchsposition mittels der beiden Verlagerungselemente in eine Nichtgebrauchsposition verlagerbar. Ferner ist das erste, von dem zweiten Stützelement entriegelte Stützelement in der Gebrauchsposition durch Drehung des ersten Verlagerungselements gegenüber dem ersten Fixierelement in eine Tischposition verlegbar beziehungsweise verlagerbar.

Das erste Fixierelement und das zweite Fixierelement können jeweils insbesondere als ein Stützlager ausgebildet sein. Das jeweilige Stützlager beziehungsweise Fixierelement dient durch das jeweilige Fixieren an den Seitenbereichen zum Anschlagen beziehungsweise Befestigen und somit zum Halten der Unterschenkelstütze an dem Fahrzeugsitz. Das jeweilige Verlagerungselement ist insbesondere in seiner Länge beziehungsweise entlang einer Richtung, insbesondere Verlagerungsrichtung, verlängerbar beziehungsweise verlagerbar. Vorzugsweise weist das Verlagerungselement ein an dem Fixierelement fixiertes Teil, beispielsweise ein Führungselement, und ein relativ zu diesem verfahrbares beziehungsweise verlegbares zweites Teil, beispielsweise einem Stützarm, auf.

Dabei kann die drehbare Verbindung zwischen dem ersten Fixierelement und dem ersten Verlagerungselement beispielsweise über ein Drehgelenk realisiert sein. Die beiden Stützelemente dienen, insbesondere wenn sie miteinander beziehungsweise gegeneinander durch die Verriegelungseinrichtung verriegelt sind, gemeinsam als Ablage beziehungsweise Auflage für wenigstens einen Unterschenkel beziehungsweise für Waden eines sich auf dem Fahrzeugsitz befindenden Fahrzeuginsassen. In der Nichtgebrauchsposition sind die Stützelemente relativ beispielsweise zu einer Sitzfläche des Fahrzeugsitzes in einer Montageposition - in einem am Fahrzeugsitz montierten Zustand - beispielsweise direkt an oder unterhalb der Sitzfläche angeordnet. Durch insbesondere eine Verlängerung beziehungsweise Verfahren der Verlagerungselemente befinden sich die Stützelemente in der Gebrauchsposition beispielsweise eine knappe Beinlänge beziehungsweise Unterschenkellänge entfernt von dem Sitzpolster des Fahrzeugsitzes, um somit vorteilhafterweise als Unterschenkelstütze zu dienen. Ist die Verriegelungseinrichtung geöffnet, das heißt das erste Stützelement gegenüber dem zweiten Stützelement entriegelt, kann durch eine Drehung beziehungsweise Verlagerung, beispielsweise über das Drehgelenk, das erste Stützelement aus der Gebrauchsstellung so verschwenkt werden, dass es dem Fahrzeuginsassen in der Tischposition als Tisch beziehungsweise als Ablage dienen kann.

In der Gebrauchsposition beziehungsweise Gebrauchsstellung befindet sich das erste Stützelement vorzugsweise auf einem oder unterhalb eines Höhenniveaus einer Sitzfläche des Fahrzeugsitzes und kann durch das Drehen in die Tischposition auf ein Höhenniveau oberhalb der Sitzfläche bewegt werden. Die Gebrauchsposition, aus welcher in die Tischposition gedreht werden kann, ist vorzugsweise die Position, bei welcher die Verlagerungselemente bis zu einer Endlage gegenüber der Nichtgebrauchsposition ausgefahren beziehungsweise verfahren sind. Dabei beschreibt die Gebrauchsposition vorteilhafterweise eine von mehreren Nutzpositionen, welche zum Stützen der Unterschenkel dienen. So kann beim Verlagern der Verlagerungselemente oder insbesondere, wenn die Verriegelungseinrichtung geöffnet ist, beim Verlagern des zweiten Verlagerungselements in die Nutzposition die Unterschenkelstütze an eine Beinlänge des Fahrzeuginsassen angepasst werden, wobei die Gebrauchsposition vorteilhafterweise die größtmöglich einstellbare Länge vorgibt.

Die jeweilige drehbare Lagerung des jeweiligen Stützelements an dem jeweiligen Ende bewirkt, dass das jeweilige Stützelement, welches beispielsweise auf einer Seite ein Ablagemöglichkeit, insbesondere in Form eines Polster, aufweist, sich so zu einem Unterschenkel des Fahrzeuginsassen orientieren kann, dass das Polster und der Unterschenkel komfortabel zueinander geführt werden können.

Mit anderen Worten umfasst die Unterschenkelstütze für einen Fahrzeugsitz ein erstes Stützlager und ein zweites Stützlager, welche zur Befestigung an den jeweiligen Seitenbereichen des Fahrzeugsitzes ausgebildet sind. Ein erstes Führungselement ist drehbar mit dem ersten Stützlager verbunden und ein zweites Führungselement ist fest mit dem zweiten Stützlager verbunden. Das jeweilige Führungselement ist Teil eines Verlagerungselements und das jeweilige Verlagerungselement ist zwischen einer Nichtgebrauchsposition und einer Gebrauchsposition verfahrbar. An einem jeweiligen in der Gebrauchsposition dem Fahrzeugsitz abgewandten Ende des Verlagerungselements ist jeweils drehbar ein jeweiliges Stützelement angeordnet. Hierbei sind die Stützelemente über eine Verriegelung miteinander verriegelbar und in einem Entriegelungszustand ist das über das erste Verlagerungselement an dem Stützlager drehbar angeordnete Stützelement durch ein Verschwenken aus der Gebrauchsposition in eine Tischposition verlegbar, in welcher das Stützelement durch einen Fahrzeuginsassen als Tisch verwendet werden kann.

Zusammenfassend ist eine Wadenstütze in Form der Unterschenkelstütze für einen Fahrzeugsitz gezeigt, wobei die Unterschenkelstütze insbesondere an Längenverstellschienen einer Längenverstelleinrichtung eines Fahrzeugsitzes angeordnet beziehungsweise fixiert werden kann, da beispielsweise an dem jeweiligen Seitenbereich des Fahrzeugsitzes solch eine Längenverstellschiene ausgebildet ist. Dabei ist die Wadenstütze ausziehbar und schwenkbar befestigt. Die Stütze weist zwei Stützelemente auf, die aneinander ver- und entriegelt werden können, wobei das erste der Stützelemente hochklappbar und als Tisch verwendbar ist.

Die Seitenbereiche des Fahrzeugsitzes befinden sich vorteilhafterweise, ausgehend von einem sich in korrekter Sitzposition auf dem Fahrzeugsitz befindenden Fahrzeuginsassen, auf einer linken Seite und einer rechten Seite des Fahrzeugsitzes. Der Fahrzeugsitz für den die Unterschenkelstütze vorgesehen ist, ist vorteilhafterweise der Fahrzeugsitz eines Kraftfahrzeugs.

Dabei weist die erfindungsgemäße Unterschenkelstütze mehrere Vorteile auf. So ist durch die erfindungsgemäße Unterschenkelstütze eine besonders einfache Lösung gefunden, eine Unterschenkelstütze besonders flexibel und darüber hinaus besonders funktional auszubilden, da zusätzlich zur Abstützfunktion der Waden zusätzlich eine Tischfunktion für einen Fahrzeuginsassen bereitgestellt wird. Ein weiterer Vorteil ergibt sich aus dieser Doppelfunktion, da beispielsweise auf einen zusätzlich zur Unterschenkelstütze mitgeführten Tisch verzichtet werden kann, wodurch der Fahrzeugsitz und somit das Kraftfahrzeug beispielsweise besonders leicht ausgebildet werden können. Darüber hinaus kann auf weitere Komponenten verzichtet werden, wodurch sich beispielsweise auch aufgrund weniger Bauteile eine besonders hohe Ausfallsicherheit und darüber hinaus ein besonders niedriger Preis für die Unterschenkelstütze, den Fahrzeugsitz und/oder das Kraftfahrzeug ergeben kann.

Somit wird eine einfache kostengünstige Lösung bereitgestellt, mit welcher die Doppelfunktion - Wadenstütze und Tisch - in einer Funktionseinheit bereitgestellt werden kann. Darüber hinaus ist durch die Fixierelemente ein direkter Kraftfluss in einen Fahrzeugrohbau beispielsweise durch Anbindung an die, insbesondere verfahrbaren, Längenverstellschienen des Fahrzeugsitzes möglich. Dadurch ist eine besonders einfache Adaption und darüber hinaus ein besonders geringer Bauraumbedarf realisierbar.

In vorteilhafter Ausgestaltung der Erfindung weist das erste Stützelement ein, insbesondere klappbares, Tischflächenverlängerungselement auf. Mit anderen Worten ist zur Verlängerung beziehungsweise Vergrößerung einer als Tischfläche nutzbaren Fläche des drehbar an dem ersten Ende gelagerten, ersten Stützelements ein Tischverlängerungselement vorgesehen. Dies kann beispielsweise aus einem Teil des Stützelements zum Vergrößern der Tischfläche ausgefahren werden. Vorteilhafterweise ist das Tischverlängerungselement jedoch klappbar, insbesondere mittels eines Klappmechanismus, beispielsweise eines Scharniers. Über den Klappmechanismus kann das Tischflächenverlängerungselement an einem Teil des Stützelements, insbesondere an dem Teil, welcher als Ablage des Unterschenkels dient, angeordnet sein. Dabei kann in der Tischposition das erste Stützelement durch die an dem Ende drehbare Lagerung derart verschwenkt beziehungsweise gedreht werden, dass eine als Tischfläche dienende Seite des Stützelements, um als Tischplatte verwendet zu werden, nach oben zeigt. Auf dieser kann durch den Klappmechanismus das Tischflächenverlängerungselement angeordnet sein. Durch Klappen, insbesondere um 180 Grad, kann das Tischflächenverlängerungselement zum Verlängern der Tischfläche bewegt werden.

Dadurch ergibt sich für die Unterschenkelstütze der Vorteil, dass diese in ihrer Doppelfunktion als Tisch besonders vorteilhaft verwendet werden kann, da eine bereitgestellte Tischfläche besonders groß ist. Darüber hinaus kann das Tischflächenverlängerungselement oder der als Tischfläche des restlichen Stützelements verwendete Teil beispielsweise Vertiefungen zur Aufnahme von Getränkebechern und/oder Besteck und/oder Geschirr und/oder elektronischen Geräten und/oder sonstigem aufweisen. So können in der Tischposition zusätzliche Funktionen bereitgestellt werden.

In weiterer vorteilhafter Ausgestaltung der Erfindung ist das jeweilige Verlagerungselement aus einem mit dem jeweiligen Fixierelement verbundenen Führungselement und einem relativ zu dem Führungselement verfahrbaren Stützarm ausgebildet, welcher jeweils das jeweilige Ende, an welchem das jeweilige Stützelement angeordnet ist, aufweist. Dabei ist das erste Führungselement somit drehbar mit dem ersten Fixierelement verbunden und das zweite Führungselement fest mit dem zweiten Fixierelement verbunden. Dabei dient das jeweilige Führungselement zum Führen, insbesondere beim Verlagern des jeweiligen Stützarms, zum Verfahren zwischen der Nichtgebrauchsposition und der Gebrauchsposition beziehungsweise zwischen der Nichtgebrauchsstellung und der Gebrauchsstellung. Somit ist das jeweilige Führungselement relativ zum Fahrzeugsitz, oder zumindest einer Komponente des Fahrzeugsitzes, wie einem Sitzelement, ortsfest. Der jeweilige Stützarm wird somit an dem Führungselement gegenüber dem Fahrzeugsitz bewegt. Durch diese Ausgestaltung des jeweiligen Verlagerungselements ergibt sich der Vorteil, dass ein Verlagern der Stützelemente zwischen Nichtgebrauchsposition und Gebrauchsposition besonders vorteilhaft durchgeführt werden kann und dazu beispielsweise besonders wenige Bauteile verwendet zu werden brauchen.

In weiterer vorteilhafter Ausgestaltung der Erfindung ist ein erster Antrieb vorgesehen, mittels welchem das erste Stützelement aus der Gebrauchsposition in die Tischposition verlagerbar ist. Zusätzlich oder alternativ ist ein zweiter Antrieb vorgesehen, mittels welchem die beiden miteinander verriegelten Stützelemente zwischen der Gebrauchsposition und der Nichtgebrauchsposition verlagerbar sind. Dabei kann der jeweilige Antrieb beispielsweise einen Elektromotor, welcher insbesondere über eine Bordelektronik mit Strom versorgt wird, aufweisen. Dadurch, dass der zweite Antrieb so ausgebildet ist, beispielsweise durch Anordnung an dem zweiten Verlagerungselement, dass in dem durch die Verriegelungseinrichtung verriegelten Zustand beide Stützelemente bewegt werden können, kann beispielsweise auf einen dritten Antrieb verzichtet werden. Ferner dient der zweite Antrieb insbesondere dazu die beiden Stützelemente - oder im entriegelten Zustand das zweite Stützelement - in eine der Nutzpositionen zu verfahren beziehungsweise zu verlagern. Durch die Verwendung wenigstens eines der Antriebe ergibt sich der Vorteil, dass die Unterschenkelstütze besonders vorteilhaft bedient werden kann, da das Verfahren aus der Gebrauchsposition in die Nichtgebrauchsposition beziehungsweise aus der Gebrauchsposition in die Tischposition für einen Fahrzeuginsassen quasi selbstständig durchgeführt wird, da dieser nicht durch eigene Kraft und/oder Bewegung die jeweilige Position anfahren muss. So erfährt der Fahrzeuginsassen einen besonderen Komfort.

In weiterer vorteilhafter Ausgestaltung der Erfindung weist der zweite Stützarm eine Verzahnung und/oder eine Zahnstange und/oder eine Spindel auf, über welche das Verlagern zwischen der Gebrauchsposition und der Nichtgebrauchsposition mittels des zweiten Antriebs durchführbar ist. Mit anderen Worten wird die Bewegung der Stützelemente durchgeführt, da durch den zweiten Antrieb die Verzahnung und/oder die Zahnstange und/oder die Spindel angetrieben beziehungsweise bewegt werden. Daraus ergibt sich der Vorteil, dass auf mechanisch besonders zuverlässige Weise eine Bewegung der Unterschenkelstütze ermöglicht wird.

In weiterer vorteilhafter Ausgestaltung der Erfindung weist das erste Stützelement eine erste Verbindungsfläche auf, welche mit einer zweiten Verbindungsfläche des zweiten Stützelements, während die beiden Stützelemente miteinander verriegelt sind, deckungsgleich orientiert ist. Das heißt, die erste Verbindungsfläche deckt sich mit der zweiten Verbindungsfläche. Ferner liegen die Verbindungsflächen im verriegelten Zustand vorteilhafterweise direkt aneinander beziehungsweise aufeinander. Zusätzlich oder alternativ weisen die beiden Verbindungsflächen einen Überlappungsbereich auf, durch welchen sich die Verbindungsflächen beim Verlagern des ersten Stützelements, aus der Tischposition in die Gebrauchsposition, berühren, wodurch die Stützelemente zum Verriegeln beziehungsweise für das Verriegeln mittels der Verriegelungseinrichtung aufeinander zu bewegbar sind. Mit anderen Worten stehen die erste und die zweite Verbindungsfläche derart zueinander beziehungsweise überlappen, dass bei dem Verlagern beziehungsweise Verlegen des ersten Stützelements aus der Tischposition in die Gebrauchsposition durch Berühren der Verbindungsflächen die beiden Stützelemente zum Verriegeln aufeinander zu bewegbar sind.

So können die beiden Verbindungsflächen beispielsweise schräg stehen. Dabei bedeutet schräg hier: weder senkrecht noch waagrecht, zu einer Richtung, welche durch die Drehung beziehungsweise eine Drehbewegung des ersten Stützelements zwischen der Tischposition und Gebrauchsposition vorgegeben ist. So finden beim Bewegen die beiden Stützelemente ab einer bestimmten Schwenkwinkeleinstellung, welche einen Zustand zwischen der Tischposition und der Gebrauchsposition (und/oder zwischen der Gebrauchsposition und der Nichtgebrauchsposition) praktisch bewegungsgesteuert zueinander, woraufhin der Verriegelungsmechanismus beziehungsweise die Verriegelungseinrichtung besonders einfach geschlossen werden kann. Durch die Verbindungsflächen ergibt sich der Vorteil, dass für ein Verriegeln ein besonders geringer Aufwand betrieben werden muss, da das Aufeinanderzubewegen in eine Verriegelungsposition der beiden Stützelemente durch einander Berühren und ein in der Drehbewegung folgendes Anschmiegen der Verbindungsflächen quasi selbstständig geschieht. Durch die Deckung der Verbindungsflächen im geschlossenen Zustand der Verriegelungseinrichtung kann die Unterschenkelstütze darüber hinaus besonders kompakt ausgebildet sein.

In weiterer vorteilhafter Ausgestaltung der Erfindung ist das zweite Stützelement breiter als das erste Stützelement ausgebildet. Insbesondere kann das zweite Stützelement die doppelte Breite aufweisen, sodass für die gesamte Breite der Stützelemente gilt, dass das erste Stützelement ein Drittel und das zweite Stützelemente zwei Drittel der Breite des zum Ablegen der Unterschenkel dienenden Teils (die beiden Stützelemente) der Unterschenkelstütze ausmacht. Durch die Teilung beziehungsweise unterschiedliche Breite der Stützelemente ergibt sich der Vorteil, dass das zweite Stützelement, welches weiterhin als Stütze für die Unterschenkel dient, während sich das erste Stützelement in der Tischposition befindet, immer noch eine Breite aufweist, um nicht nur einem Unterschenkel des Fahrzeuginsassen, sondern beiden Unterschenkel des Fahrzeuginsassen komfortabel zum Abstützen zu dienen. Darüber hinaus wird für das erste Stützelement beispielsweise aufgrund des Tischverlängerungselements keine derartige Breite benötigt, da die Tischfläche durch das Tischverlängerungselements vergrößert werden kann. Dadurch ergibt sich der Vorteil, dass die Unterschenkelstütze besonders komfortabel genutzt werden kann.

Ein zweiter Aspekt der Erfindung betrifft einen Fahrzeugsitz, welcher die erfindungsgemäße Unterschenkelstütze oder eine der beschriebenen Ausführungsformen der Unterschenkelstütze aufweist. Dabei kann der Fahrzeugsitz als feststehender Fahrzeugsitz ausgebildet sein, sodass die beiden Fixierelemente, insbesondere direkt, an einer Bodenanbindung des Fahrzeugsitzes fixiert sind. Alternativ kann der Fahrzeugsitz in der Länge beziehungsweise entlang der Fahrzeuglängsrichtung verstellbaren sein und eine entsprechende Längenverstelleinrichtung aufweisen. In diesem Falle ist das erste Fixierelement an einer ersten Längenverstellschiene der Längenverstelleinrichtung fixiert und das zweite Fixierelement ist an einer zweiten Längenverstellschiene der Längenverstelleinrichtung fixiert.

Durch den erfindungsgemäßen Fahrzeugsitz ergibt sich der Vorteil, dass eine besonders komfortable Unterschenkelstütze des Fahrzeugsitzes sowohl an feststehenden Fahrzeugsitzen als auch an längenverstellbaren Fahrzeugsitzen realisierbar ist.

Ein dritter Aspekt der Erfindung betrifft ein Kraftfahrzeug, insbesondere einen als Personenkraftwagen ausgebildeten Kraftwagen, welcher eine erfindungsgemäße und/oder vorteilhafte Ausgestaltung der Unterschenkelstütze und zusätzlich oder alternativ einen erfindungsgemäßen Fahrzeugsitz aufweist.

In einer vorteilhaften Ausgestaltung des dritten Aspekts der Erfindung sind das erste Fixierelement und somit die an dem ersten Fixierelement angeordneten Komponenten, wie das erste Verlagerungselement und das erste Stützelement, an einer beziehungsweise an der einer Fahrzeugtüre abgewandten Seite des Fahrzeugsitzes angeordnet. Mit anderen Worten ist das erste Stützelement, welches die Tischfunktion beziehungsweise die Tischposition ausbilden kann, auf der Tunnelseite des Kraftfahrzeugs angeordnet. Durch die Anordnung an der der Fahrzeugtüre abgewandten Seite des Fahrzeugsitzes ergibt sich der Vorteil, dass, auch während sich das erste Stützelement in der Tischposition befindet, problemlos in den Fahrzeugsitz ein- und ausgestiegen werden kann.

Vorteile und vorteilhafte Ausgestaltungen des ersten Aspekts der Erfindung sind als Vorteile und vorteilhafte Ausgestaltungen des zweiten und/oder dritten Aspekts der Erfindung anzusehen und jeweils umgekehrt. So sind Vorteile und vorteilhafte Ausgestaltungen des dritten Aspekts der Erfindung als Vorteile und vorteilhafte Ausgestaltungen des zweiten Aspekts und/oder ersten Aspekts der Erfindung anzusehen. Darüber hinaus Vorteile und vorteilhafte Ausgestaltungen des zweiten Aspekts der Erfindung als Vorteile und vorteilhafte Ausgestaltungen des ersten und des dritten Aspekts der Erfindung.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigt:
- Fig. 1: in einer perspektivischen Schrägansicht eine Unterschenkelstütze für einen Fahrzeugsitz;
- Fig. 2: in einer schematischen Draufsicht die Unterschenkelstütze umfassend zwei Stützelemente gemäß Fig. 1;
- Fig. 3: in einer schematischen Perspektivansicht einen Fahrzeugsitz in einem Kraftfahrzeug mit einer Unterschenkelstütze gemäß den Fig. 1 und 2, wobei sich die Stützelemente der Unterschenkelstütze in einer Nichtgebrauchsposition befinden;
- Fig. 4: in einer schematischen Seitenansicht den Fahrzeugsitz mit Unterschenkelstütze gemäß Fig. 3, wobei sich die Stützelemente in einer Gebrauchsposition befinden;
- Fig. 5: in einer schematischen Draufsicht den Fahrzeugsitz gemäß den Fig. 3 und 4, mit den Stützelementen zueinander entriegelt in der Gebrauchsposition;
- Fig. 6: in einer schematischen Perspektivansicht den Fahrzeugsitz gemäß den Fig. 3 bis 5, wobei sich das erste der Stützelemente in einer Tischposition und das zweite der Stützelemente in der Gebrauchsposition befinden;
- Fig. 7: in einer schematischen Frontansicht den Fahrzeugsitz gemäß den Fig. 3 bis 6, wobei ein Tischverlängerungselement des ersten Stützelements geklappt wird; und
- Fig. 8: in einer schematischen Perspektivansicht den Fahrzeugsitz gemäß den Fig. 3 bis 7, wobei das Tischverlängerungselement ausgeklappt ist und das zweite Stützelement zwischen der Gebrauchsposition und der Nichtgebrauchsposition in eine Nutzposition verfahren ist.

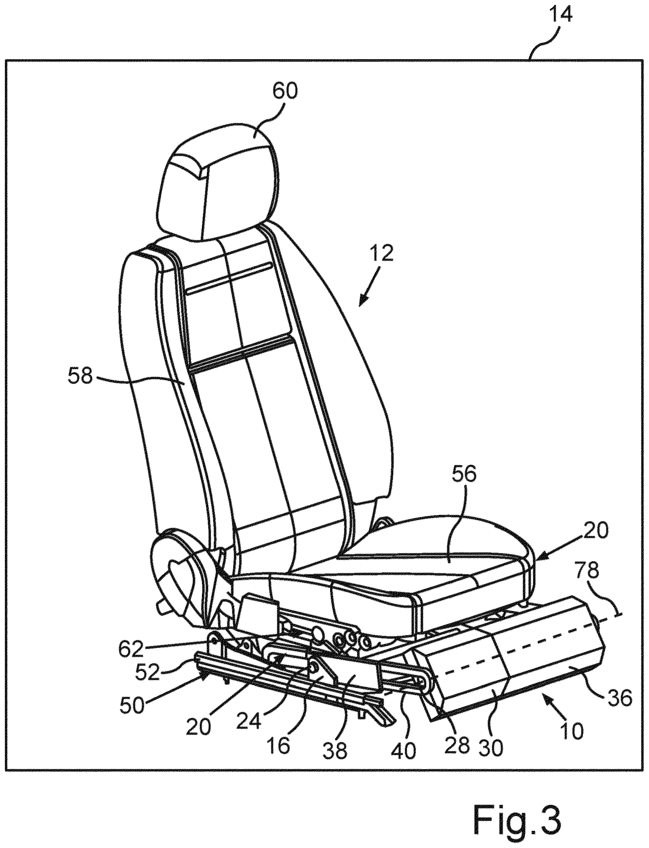

Kraftfahrzeuge verhelfen den Menschen zu einer immer größer werdenden Mobilität. Somit wird ein Fahrzeuginnenraum eines Kraftfahrzeugs, beispielsweise eines Personenkraftwagens, häufiger und dadurch vielseitiger genutzt. Daher sollte der Fahrzeuginnenraum einem Fahrzeuginsassen möglichst viel Komfort bieten. Darüber hinaus ist gleichzeitig wünschenswert, dass das Mehr an Komfort nicht mit einem Mehr an Gewicht einhergeht. Daher zeigen die folgenden Fig. eine Unterschenkelstütze 10 für einen Fahrzeugsitz 12, sowie den Fahrzeugsitz 12, welcher beispielsweise in Fig. 3 gezeigt ist. Ferner zeigt die Fig. 3 zumindest schematisch ein Kraftfahrzeug 14, welches den Fahrzeugsitz 12 und somit die Unterschenkelstütze 10 umfasst. Dabei weist die gezeigte Unterschenkelstütze 10, welche zum Abstützen wenigstens eines Unterschenkels beziehungsweise wenigstens einer Wade des Fahrzeuginsassen dient und auch als Wadenstütze bezeichnet werden kann, für besonders großen Komfort und besonders geringes Gewicht eine Doppelfunktion auf.

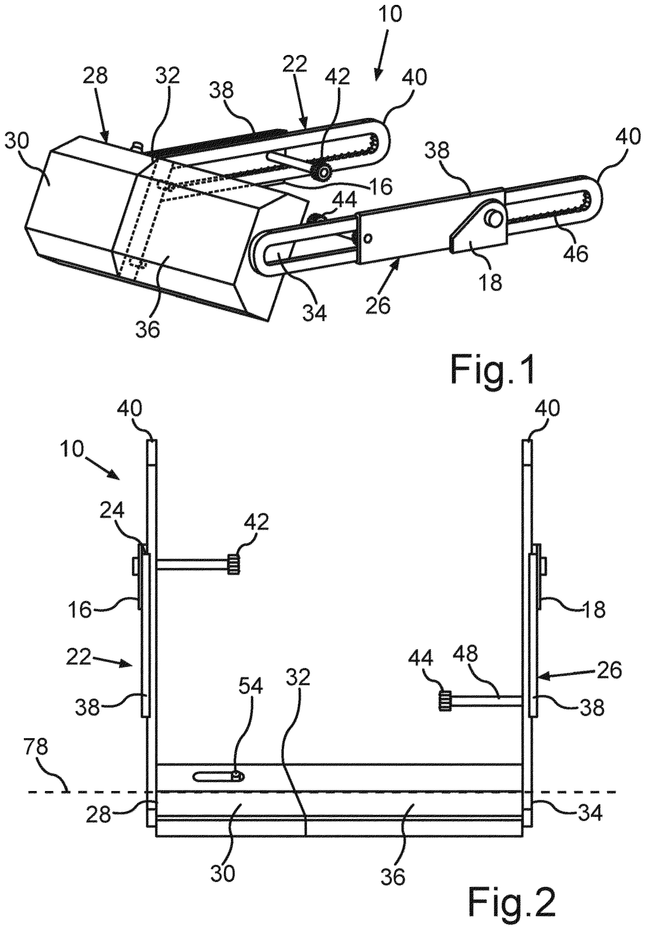

Wie Fig. 1 in einer schematischen Perspektivansicht zeigt, umfasst die Unterschenkelstütze 10 ein erstes Fixierelement 16 und ein zweites Fixierelement 18. Dabei dienen das erste Fixierelement 16 und das zweite Fixierelement 18 zum Fixieren, also zum Halten, der Unterschenkelstütze 10 an gegenüberliegenden, in der Fig. 3 gezeigten, Seitenbereichen 20 des Fahrzeugsitzes 12 und somit zum Halten der Unterschenkelstütze 10 am beziehungsweise gegenüber dem Fahrzeugsitz 12.

Ein erstes Verlagerungselement 22 ist, insbesondere über ein Drehgelenk 24, drehbar mit dem ersten Fixierelement 16 verbunden. Mit dem zweiten Fixierelement 18 ist fest ein zweites Verlagerungselement 26 verbunden. Im Gegensatz zu dem ersten Verlagerungselement 22 bedeutet fix bei dem zweiten Verlagerungselement 26 im Wesentlichen nicht drehbar.

An einem in einer Gebrauchsposition dem ersten Fixierelement 16 gegenüberliegenden Ende 28 des ersten Verlagerungselements 22 ist ein erstes drehbar gehaltenes Stützelement 30 vorgesehen. Mittels einer Verriegelungseinrichtung 32 ist das erste Stützelement 30 mit einem zweiten drehbar an einem in der Gebrauchsposition dem zweiten Fixierelement 18 abgewandten Ende 34 des zweiten Verlagerungselements 26 angeordnetes, zweites Stützelement 36 aneinander verriegelbar. Dabei zeigen sowohl die Fig. 1 in ihrer schematischen Perspektivansicht als auch die Fig. 2 in ihrer Draufsicht die durch die Verriegelungseinrichtung 32 miteinander verriegelten Stützelemente 30 und 36.

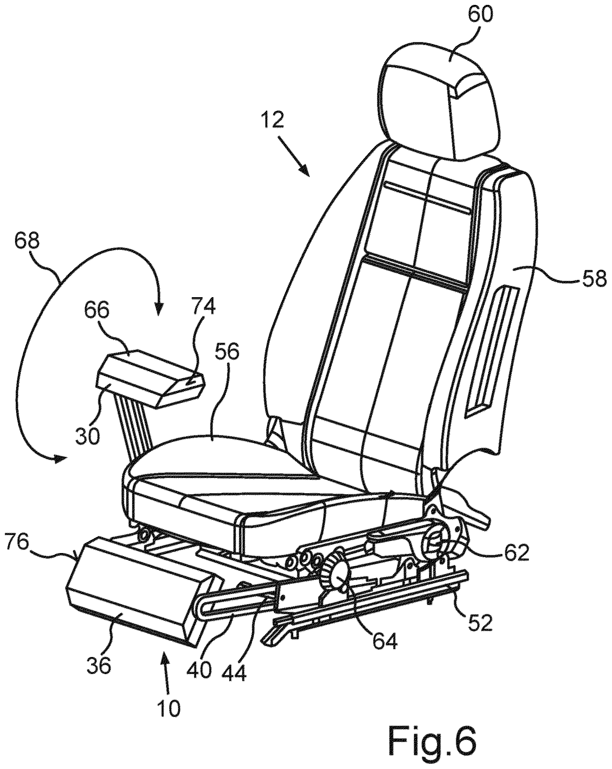

Damit die gezeigte Unterschenkelstütze 10 besonders vorteilhaft und mit besonders großem Funktionsumfang verwendet werden kann, ist das erste, von dem zweiten Stützelement 36 entriegelte Stützelement in der Gebrauchsstellung durch Drehung des ersten Verlagerungselements 22 gegenüber dem ersten Fixierelement 16 in eine Tischposition, welche in den Fig. 6 bis 8 gezeigt ist, verlegbar.

Vorteilhafterweise ist das jeweilige Verlagerungselement 22 und 26 aus einem mit dem jeweiligen Fixierelement 16 und 18 verbundenen Führungselement 38 und einem relativ zu dem Führungselement 38 verfahrbaren Stützarm 40 ausgebildet, welcher jeweils das jeweilige Ende 28 und 34, an welchem das jeweilige Stützelement 30 beziehungsweise 36 angeordnet ist, aufweist.

Um die Stützelemente 30 und 36, welche in der Gebrauchsposition zum Ablegen der Unterschenkel des Fahrzeuginsassen dienen, aus ihrer Nichtgebrauchsposition besonders vorteilhaft zu bewegen und darüber hinaus das erste Stützelement 30 aus der Gebrauchsposition in die Tischposition zu verlagern, sind Antriebe 42 und 44 vorgesehen. So dient der erste Antrieb 42 zum Verlagern des ersten Stützelements 30 aus der Gebrauchsposition in die Tischposition und zurück. Der zweite Antrieb 44 dient zum Verlagern der beiden miteinander verriegelten Stützelemente 30 und 36 zwischen der Gebrauchsposition und der Nichtgebrauchsposition, in welcher, wie in Fig. 3 gezeigt, die Stützelemente 30 und 36 an beziehungsweise unterhalb einem Sitzelement 56 des Fahrzeugsitzes 12 ruhen.

Aus den beiden Fig. 1 und 2 ist entnehmbar, dass der zweite Stützarm 40 des zweiten Verlagerungselements 26 eine Verzahnung 46, zusätzlich oder alternativ eine Zahnstange und zusätzlich oder alternativ eine Spindel 48 aufweist, über welche das Verlagern zwischen der Gebrauchsposition und der Nichtgebrauchsposition mittels des zweiten Antriebs 44 durchführbar beziehungsweise vermittelbar ist. Zusätzlich oder alternativ kann eine weitere Verzahnung und/oder eine weitere Zahnstange und/oder eine weitere Spindel vorgesehen sein, um das Verlagern zwischen der Gebrauchsposition und der Tischposition mittels des ersten Antriebs 42 durchführen beziehungsweise vermitteln zu können.

Ferne zeigt Fig. 2, dass die Verriegelungseinrichtung 32 vorteilhafterweise über ein Bedienelement 54 zum Ver- beziehungsweise Entriegeln, also zum Öffnen und Schließen der Verriegelungseinrichtung 32 und somit zum Verbinden und/oder Trennen der beiden Stützelemente 30 und 36 aneinander beziehungsweise zueinander, verfügt.

Durch die jeweils drehbare Lagerung beziehungsweise Anordnung des jeweiligen Stützelements 30 und 36 am jeweiligen Ende 28 und 34 können die beiden Stützelemente 30 und 36 um eine Drehachse 78 drehbar sein. Die Drehachse 78 kann bei geöffneter Verriegelungseinrichtung 32 und der dadurch möglichen Trennung der beiden Stützelemente 30 und 36 geteilt werden.

Fig. 3 zeigt in einer schematischen Perspektivansicht die Unterschenkelstütze 10 angeordnet an dem Fahrzeugsitz 12. Dabei zeigt die Fig. 3 ferner eine schematische Anordnung des Fahrzeugsitzes 12 in dem schematisch dargestellten Kraftfahrzeug 14.

Der gezeigte Fahrzeugsitz 12 verfügt über eine Längenverstelleinrichtung 50, welche Längenverstellschienen 52 aufweist. Damit die Unterschenkelstütze 10 besonders vorteilhaft an dem Fahrzeugsitz 12 gehalten beziehungsweise fixiert werden kann, ist das erste Fixierelement 16 an einer ersten der Längenverstellschienen 52 an einem ersten der Seitenbereiche 20 fixiert. Das zweite Fixierelement 18 ist dagegen an einer zweiten der Längenverstellschienen 52 an dem zweiten Seitenbereich 20 fixiert.

Damit der Fahrzeugsitz 12 besonders vorteilhaft genutzt werden kann, ist das erste Fixierelement 16 des Kraftfahrzeugs 14, welches den Fahrzeugsitz 12 aufweist, an einer einer Fahrzeugtüre abgewandten Seite des Fahrzeugsitzes 12 und somit im Gegensatz zur einer Türseite an der Tunnelseite, angeordnet.

Der Fahrzeugsitz 12 kann ferner zusätzlich zu dem Sitzelement 56, eine Rückenlehne 58 sowie eine Kopfstütze 60 umfassen. Ferner kann das Sitzelement 56 auf einem Rahmenelement 62, welches über die Längenverstellschienen 52 an der Längenverstelleinrichtung 50 angeordnet ist, verfügen. Des Weiteren kann der Fahrzeugsitz 12 teilweise gezeigte Verkleidungselemente und/oder für die Längenverstelleinrichtung ein Verstellelement 64 aufweisen.

Um die Unterschenkelstütze 10 in ihrer Gebrauchsposition zur Ablage der Unterschenkel zu nutzen und darüber hinaus in der Tischposition das erste Stützelement 30 als Tisch zu verwenden, kann zur Bedienung der Unterschenkelstütze 10 ein Verfahren, welches mehrere Schritte umfasst, vorgesehen sein:

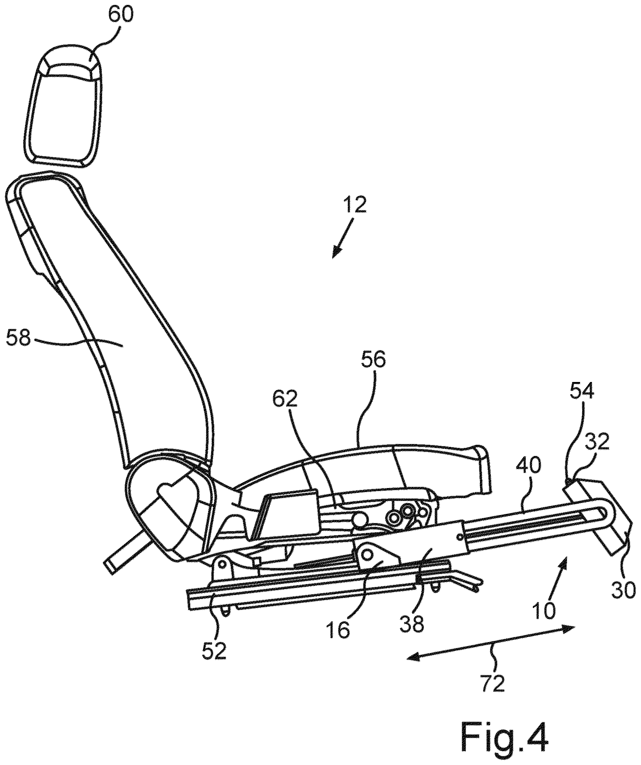

In einem ersten Schritt werden die insbesondere die beiden verbundenen, da verriegelten, Stützelemente 30 und 36 mittels des Antriebs 44 in die in der Fig. 4 gezeigte Gebrauchsposition vollständig ausgefahren. Im Unterschied dazu zeigt die Fig. 3 die Unterschenkelstütze beziehungsweise deren Stützelemente 30 und 36 in der Nichtgebrauchsposition. Das Verlagern beziehungsweise Verfahren zwischen der Gebrauchsposition und der Nichtgebrauchsposition erfolgt vorteilhafterweise entlang einer Verlagerungsrichtung 72.

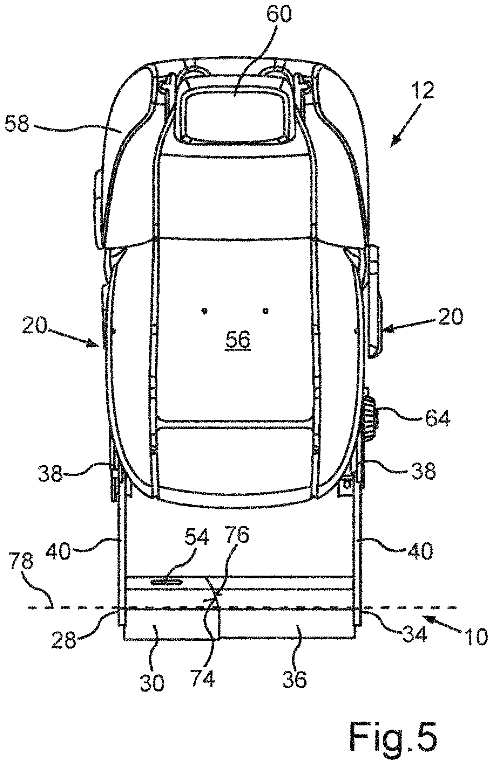

Die Fig. 5 zeigt, wie in einem zweiten Schritt des Verfahrens die Verriegelungseinrichtung 32 über das Bedienelement 54, welches sich in den Fig. 1 bis 4 in einer verriegelten beziehungsweise geschlossenen Position befindet, entriegelt wird.

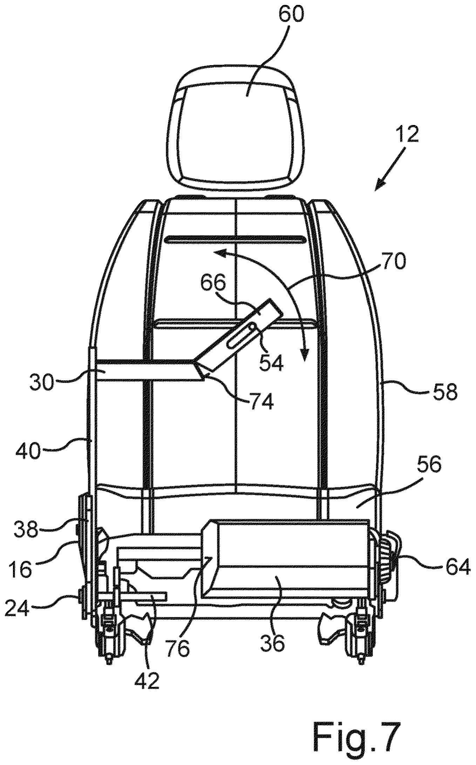

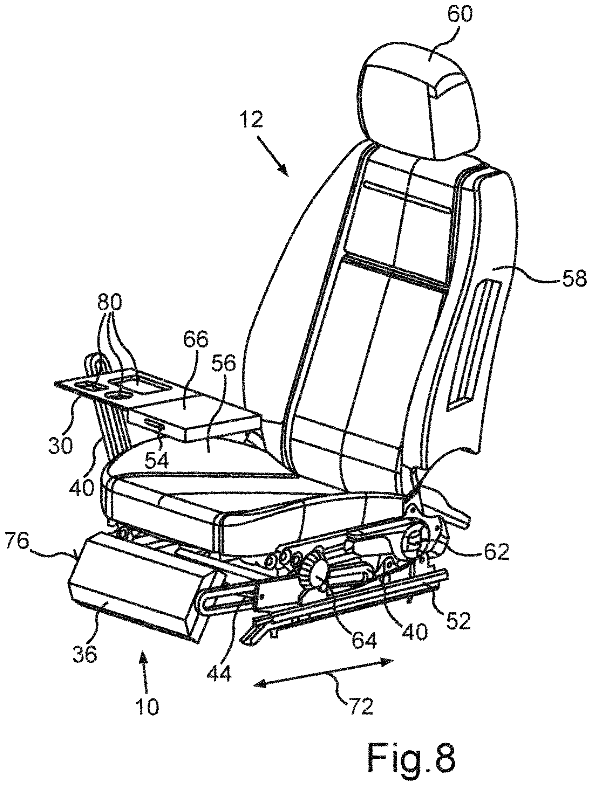

In einem dritten Schritt des Verfahrens wird, insbesondere durch den ersten Antrieb 42, das erste Stützelement 30, aus der Gebrauchsposition in die Tischposition verfahren. Die Tischposition ist in der Fig. 6 sowie in den Fig 7 und 8 gezeigt.

Fig. 6 zeigt ferner, wie in einem vierten Schritt, durch Drehen des ersten Stützelements 30 entlang der durch einen Pfeil vorgegeben Drehrichtung 68 das Stützelement 30 aus einer Unterschenkelabstützposition, bei welcher beispielsweise eine Polsterseite des Stützelements 30 zu einem Fahrzeughimmel zeigt, in eine Tischplattenposition gedreht wird. Bei der Tischplattenposition zeigt eine, insbesondere tischplattenartige, Seite des Stützelements 30 zum Fahrzeughimmel. Dies ist in Fig. 7 gezeigt.

Anschließend kann in einem in Fig. 7 gezeigten, fünften Schritt ein Tischverlängerungselement 66 entlang einer durch einen Pfeil angedeuteten Klapprichtung 70 aufgeklappt werden, um, wie in Fig. 8 zu sehen, eine besonders breite nutzbare Tischfläche zu schaffen.

Alternativ zu dieser Funktionsweise, kann die Erfindung auch so ausgeführt werden, dass auf das in Fig. 6 dargestellte Drehen in Drehrichtung 68 verzichtet wird. D.h. das Stützelement 30 wird, wie vorab beschrieben hochgeschwenkt, wie in Fig. 6 bildlich dargestellt direkt mit der auch als Wadenstütze fungierenden Fläche als Tischfläche, oder/und durch anschließenden Schwenkvorgang in Klapprichtung 70 wird die Tischfläche erzeugt.

Schließlich kann in einem sechsten Schritt eine Längenjustierung erfolgen. Das Resultat der Längenjustierung zeigt Fig. 8. Dabei wird ein Abstand zwischen Sitzelement 56 und zweitem Stützelement 36 über ein Verfahren des Verlagerungselements 26 entlang der Verlagerungsrichtung 72 eingestellt, wodurch eine Nutzposition eingenommen werden kann, welche von der Gebrauchsposition abweicht. In der Gebrauchsposition ist das Stützelement 36 (und/oder 30) über das Verlagerungselement 26 (und/oder 22) voll ausgefahren. Die Nutzposition kann die Gebrauchsposition oder eine von der Nichtgebrauchsposition verschieden Position des Stützelements 36 beziehungsweise der Stützelemente 30 und 36 sein. Die Verlagerungsrichtung 72 ist die Richtung, entlang derer die Stützelemente 30 und 36 zwischen der Nichtgebrauchsposition und der Gebrauchsposition verlagert werden. Dabei kann auch in einem verriegelten Zustand der beiden Stützelemente 30 und 36 eine Nutzposition der Stützelemente 30 und 36, insbesondere in Abhängigkeit einer Beinlänge des Fahrzeuginsassen, zwischen der Gebrauchsposition und der Nichtgebrauchsposition zum Stützen der Unterschenkel eingestellt werden.

Wie insbesondere durch einen Vergleich der Fig. 5 bis 7 ersichtlich wird, weist das erste Stützelement 30 eine erste Verbindungsfläche 74 auf, welche mit einer zweiten Verbindungsfläche 76 des zweiten Stützelements 36, während die beiden Stützelementen 30 und 36 miteinander verriegelt sind, deckungsgleich orientiert beziehungsweise in Deckung ist, dies zeigt Fig. 5. Ferner dienen die beiden Verbindungsflächen 74 und 76 durch Ausbilden eines Überlappungsbereichs dazu, dass sich die beiden Verbindungsflächen 74 und 76 beim Verlagern des ersten Stützelements 30 aus der Tischposition in die Gebrauchsposition berühren und dadurch die Stützelementen 30 und 36 für ein besonders einfaches Verriegeln der Verriegelungseinrichtung 32 aufeinander zu bewegbar sind. Dies wird durch die Orientierung der Verbindungsflächen 74 und 76 zueinander in den Fig. 6 und 7 verdeutlicht.

Die Fig. zeigen ferner, dass das zweite Stützelement 36 breiter als das erste Stützelement 30 ist, insbesondere weist das zweite Stützelement 36 die doppelte Breite gegenüber dem ersten Stützelement 30 auf. So ist die gesamte Breite der Unterschenkelstütze 10 zu einem Drittel durch das erste Stützelement 30 und zu zwei Dritteln durch das zweite Stützelement 32 gebildet. Durch die Breite des breiteren, zweiten Stützelements 36 kann, wenn das erste Stützelement 30 in der Tischposition verwendet wird, genug Platz zum Ablegen der beiden Unterschenkel des Fahrzeuginsassen aufgebracht werden.

Schließlich zeigen insbesondere die Fig. 7 und 8, dass das erste Stützelement 30 ein klappbares Tischverlängerungselement 66 aufweist. Dabei können in der durch das Stützelement 30 gebildeten Tischfläche, wie in Fig. 8 zu sehen ist, beispielsweise auch Ablagemulden 80 zum Ablegen von Gegenständen vorgesehen sein, insbesondere beispielsweise von Getränkebechern.

Zusammenfassend zeigen die Fig. eine Unterschenkelstütze 10, einen Fahrzeugsitz 12 sowie ein Kraftfahrzeug 14. An dem Fahrzeugsitz 12 ist rechts und links auf bewegten Längenverstellschienen 52 jeweils ein Stützlager in Form der Stützelemente 30 und 36 angeordnet. An diesen Stützlagern ist jeweils ein Führungselement 38 angebunden, wobei das Führungselement 38 auf der Türseite fest mit dem Stützlager verbunden ist und/oder einteilig ausgeführt ist. Währenddessen ist auf der Tunnelseite, also der der Tür abgewandten Seite, das Führungselement 38 über das Drehgelenk 24 mit dem Stützlager verbunden. Darüber hinaus ist das tunnelseitige Führungselement 38, insbesondere fest, mit dem Antrieb 42 verbunden, der es für die Tischfunktion hochschwenkt.

Mit diesen Führungselementen 38 verschieben sich die Stützarme 40 der Wadenstütze beziehungsweise der Unterschenkelstütze 10. So wird die Wadenstütze aus der Nichtgebrauchsposition, in welcher sich die Stützelemente 30 und 36 insbesondere direkt am Sitzkissen beziehungsweise dem Sitzelement 56 befinden, in die vom Fahrzeuginsassen gewünschte Nutzposition bis maximal zur Gebrauchsposition gebracht. Die eigentliche Wadenauflage ist hierbei drehbar gelagert, insbesondere um die jeweilige Drehachse 78. So kann sich die Unterschenkelstütze beziehungsweise deren aus den Stützelementen 30 und 36 gebildete Wadenauflage durch die Drehbarkeit automatisch auf einen besonders vorteilhaften Winkel für den Fahrzeuginsassen ausrichten. Für eine Vor- und Rückbewegung zwischen der Gebrauchsposition und der Nichtgebrauchsposition ist der, insbesondere tunnelseitige, Stützarm 40 vorzugsweise mit der Verzahnung 46 ausgestattet, die über den Antrieb 44 zum Ausführen des Verlagerns dient. Alternativ kann der Stützarm 40 mit einer Zahnstange oder auch zusätzlich oder alternativ mit der Spindel 48 für den Antrieb ausgestattet sein.

Vorteilhafterweise umfasst die eigentliche Wadenstütze eine Zweidrittel-Eindrittel-Unterteilung der Stützelemente 30 und 36, wobei das Zweidrittel-Stützelement 36 ausschließlich als Wadenstütze dient, während das Eindrittel-Stützelement 30 sowohl als Wadenstütze, wie auch als Tisch verwendet werden kann. Für die Tischfunktion muss nun die Wadenstütze zunächst in die vorderste Position, also die Gebrauchsposition, gebracht werden. Dann ist ein Verriegelungsmechanismus, die Verriegelungseinrichtung 32, für die Teilung der durch die Stützelemente 30 und 36 gebildeten Wadenstütze zu öffnen. Der Fahrzeuginsasse sollte seine Beine für eine einfache Bedienung leicht zum türseitigen Teil der Unterschenkelstütze 10 bewegen. Darauf kann mit dem Antrieb 42 der Tisch, welcher im Wesentlichen durch das Stützelement 30 gebildet ist, in die Tischposition hochgeschwenkt werden. Für den Gebrauch als Tisch wird dieser Teil der Wadenstütze insbesondere um 180 Grad gedreht und kann zur Vergrößerung der Tischfläche noch einmal aufgeklappt werden. Alternativ hierzu kann die Ausführung so umgesetzt werden, dass auf die 180° Drehung verzichtet wird und zum einen die 1/3 Wadenstütze direkt als Tischfläche dient, oder zum anderen die Tischfläche durch das Aufklappen erzeugt wird. Da der Stützarm 40 für die Tischfunktion vorteilhafterweise auf der Tunnelseite angeordnet ist, kann, während die Tischfunktion genutzt wird, auch problemlos in den Fahrzeugsitz 12 ein- und ausgestiegen werden.

Während sich das Stützelement 30 in der Tischposition befindet, kann somit der türseitige Teil der Wadenstütze, das Stützelement 36, beliebig vor- und zurückgefahren werden, um eine vorteilhafte Nutzposition zu erreichen. Um die ursprüngliche Wadenstützfunktion wieder herzustellen, wird über die Drehung das Stützelement 30 heruntergeschwenkt und das Stützelement 36, falls sich dieses in einer von der Gebrauchsposition unterschiedlichen Nutzposition befindet, in die Gebrauchsposition und somit in die vorderste Position gebracht, welche beispielsweise in den Fig. 4 bis 7 zu sehen ist. Im Gegensatz dazu zeigt die Fig. 8 eine von der Gebrauchsposition unterschiedliche Nutzposition. Durch die schräg stehenden Verbindungsflächen 74 und 76 können die beiden Stützelemente 30 und 36 zueinander besonders einfach positioniert werden, sodass in der vordersten Position - in der Gebrauchsposition - der beiden Stützelemente 30 und 36 diese ab einer bestimmten Schwenkwinkeleinstellung praktisch bewegungsgesteuert zueinander finden. Nun kann die Verriegelungseinrichtung 32 wieder geschlossen werden und die aus den Stützelementen 30 und 36 gebildete Wadenstütze der Unterschenkelstütze 10 kann wie eine konventionelle Wadenstütze verwendet werden.

Kurz gesagt wird eine Unterschenkelstütze 10 für einen Fahrzeugsitz 12 gezeigt, mit einem ersten Fixierelement 16 und mit einem zweiten Fixierelement 18, welche zum Fixieren der Unterschenkelstütze 10 an dem Fahrzeugsitz 12 ausgebildeten sind, ein erstes Verlagerungselement 22 ist drehbar mit dem ersten Fixierelement 16 verbunden und ein zweites Verlagerungselement 26 ist fest mit dem zweiten Fixierelement 18 verbunden, an einem ersten Ende 28 des ersten Verlagerungselement 22 ist ein erstes, drehbar an diesem gehaltenes Stützelement 30 vorgesehen, welche mittels einer Verriegelungseinrichtung 32 mit einem zweiten, drehbar an einem zweiten Ende 34 des zweiten Verlagerungselements 26 angeordneten Stützelement 36 verriegelbar ist, wobei die beiden Stützelement 30, 36 aus einer Gebrauchsposition mittels der Verlagerungselemente 22, 26 in eine Nichtgebrauchsposition verlagerbar sind und das erste Stützelement 30 zusätzlich aus der Gebrauchsstellung in eine Tischposition verlegbar ist.

Die gezeigte Unterschenkelstütze 10 kann in gleicher Weise ebenso an einen im Gegensatz zu dem Ausführungsbeispiel des Fahrzeugsitzes 12 feststehenden Fahrzeugsitz ohne Längenverstelleinrichtung 50 genutzt werden, in diesem Fall werden die Fixierelemente 16 und 18 und beispielsweise insbesondere auch die Antriebe 42 und 44 direkt an einer Bodenanbindung des Fahrzeugsitzes angebunden.

Die gezeigte Unterschenkelstütze 10, der Fahrzeugsitz 12 und das Kraftfahrzeug 14 bieten einen besonders großen Komfort und eine besondere Funktionsvielfalt bei gleichzeitig besonders kompaktem Bauraum beziehungsweise Gewicht.

## Patentansprüche

1. Unterschenkelstütze (10) für einen Fahrzeugsitz (12), mit einem ersten Fixierelement (16) und mit einem zweiten Fixierelement (18), welche zum Fixieren der Unterschenkelstütze (10) an gegenüberliegenden Seitenbereichen (20) des Fahrzeugsitzes (12) ausgebildet sind, wobei ein erstes Verlagerungselement (22) ist drehbar mit dem ersten Fixierelement (16) verbunden ist und ein zweites Verlagerungselement (26) fest mit dem zweiten Fixierelement (18) verbunden ist, wobei an einem in einer Gebrauchsposition dem ersten Fixierelement (16) abgewandten Ende (28) des ersten Verlagerungselement (22) ein erstes, drehbar an diesem gehaltenes Stützelement (30) vorgesehen ist, welches mittels einer Verriegelungseinrichtung (32) mit einem zweiten, drehbar an einem in der Gebrauchsposition dem zweiten Fixierelement (18) abgewandten Ende (34) des zweiten Verlagerungselements (26) angeordneten Stützelement (36) aneinander verriegelbar ist, wobei die beiden Stützelemente (30, 36) aus der Gebrauchsposition mittels der Verlagerungselemente (22, 26) in eine Nichtgebrauchsposition verlagerbar sind und das erste, von dem zweiten Stützelement (36) entriegelte Stützelement (30) in der Gebrauchsposition durch Drehung des ersten Verlagerungselements (22) gegenüber dem ersten Fixierelement (16) in eine Tischposition verlegbar ist.

2. Unterschenkelstütze (10) nach Anspruch 1,
**dadurch gekennzeichnet, dass**
das erste Stützelement (30) ein, insbesondere klappbares, Tischflächenverlängerungselement (66) aufweist.

3. Unterschenkelstütze (10) nach Anspruch 1 oder 2,
**dadurch gekennzeichnet, dass**
das jeweilige Verlagerungselement (22, 26) aus einem mit dem jeweiligen Fixierelement (16, 18) verbundenen Führungselement (38) und einem relativ zu dem Führungselement (38) verfahrbaren Stützarm (40) ausgebildet ist, welcher jeweils das jeweilige Ende (28, 34), an welchem das jeweilige Stützelement (30, 36) angeordnet ist, aufweist.

4. Unterschenkelstütze (10) nach einem der vorhergehenden Ansprüche,
**dadurch gekennzeichnet, dass**
ein erster Antrieb (42) vorgesehen ist, mittels welchem das erste Stützelement (30) aus der Gebrauchsposition in die Tischposition verlagerbar ist und/oder ein zweiter Antrieb (44) vorgesehen ist, mittels welchem die beiden miteinander verriegelten Stützelemente (30, 36) zwischen der Gebrauchsposition und der Nichtgebrauchsposition verlagerbar sind.

5. Unterschenkelstütze (10) nach Anspruch 3 und 4,
**dadurch gekennzeichnet, dass**
der zweite Stützarm (40) eine Verzahnung (46) und/oder eine Zahnstange und/oder eine Spindel (48) aufweist, über welche das Verlagern zwischen der Gebrauchsposition und der Nichtgebrauchsposition mittels des zweiten Antriebs (44) durchführbar ist.

6. Unterschenkelstütze (10) nach einem der vorhergehenden Ansprüche,
**dadurch gekennzeichnet, dass**
das erste Stützelement (30) eine erste Verbindungsfläche (74) aufweist, welche mit einer zweiten Verbindungsfläche (76) des zweiten Stützelements (36), während die beiden Stützelemente (30, 36) miteinander verriegelt sind, deckungsgleich orientiert ist und/oder die beiden Verbindungsflächen (74, 76) einen Überlappungsbereich aufweisen, durch welchen sich die Verbindungsflächen (74, 76) beim Verlagern des ersten Stützelements (30), aus der Tischposition in die Gebrauchsposition, berühren und dadurch die Stützelemente (30, 36) zum Verriegeln der Verriegelungseinrichtung (32) aufeinander zu bewegbar sind.

7. Unterschenkelstütze (10) nach einem der vorhergehenden Ansprüche,
**dadurch gekennzeichnet, dass**
das zweite Stützelement (36) breiter als das erste Stützelement (30) ist und insbesondere die doppelte Breite aufweist.

8. Fahrzeugsitz (12) umfassend eine Unterschenkelstütze (10) nach einem der vorhergehenden Ansprüche, wobei die Fixierelemente (16, 18) an einer Bodenanbindung des Fahrzeugsitzes (12) fixiert sind oder der Fahrzeugsitz (12) eine Längenverstelleinrichtung (50) mit Längenverstellschienen (52) aufweist und das erste Fixierelement (16) an einer ersten der Längenverstellschienen (52) und das zweite Fixierelement (18) an einer zweiten der Längenverstellschienen (52) fixiert ist.

9. Kraftfahrzeug (14) umfassend eine Unterschenkelstütze (10) nach einem der Ansprüche 1 bis 7 und/oder einen Fahrzeugsitz (12) nach Anspruch 8.

10. Kraftfahrzeug (14) gemäß Anspruch 9;
**dadurch gekennzeichnet, dass**
das erste Fixierelement (16) an einer einer Fahrzeugtüre abgewandten Seite des Fahrzeugsitzes (12) angeordnet ist.

## Claims

1. Lower leg support (10) for a vehicle seat (12), comprising a first fixing element (16) and comprising a second fixing element (18), which are designed to fix the lower leg support (10) to opposing side regions (20) of the vehicle seat (12), wherein a first movement element (22) is rotatably connected to the first fixing element (16) and a second movement element (26) is fixedly connected to the second fixing element (18),
wherein a first support element (30) is provided at an end (28) of the first movement element (22) that faces away from the first fixing element (16) in a use position, which support element is rotatably held on said movement element and can be locked by means of a locking device (32) to a second support element (36) which is rotatably arranged on an end (34) of the second movement element (26) that faces away from the second fixing element (18) in the use position, wherein the two support elements (30, 36) are movable from the use position into a non-use position by means of the movement elements (22, 26), and, in the use position, the first support element (30), which is unlocked from the second support element (36), is movable into a table position by rotating the first movement element (22) relative to the first fixing element (16).

2. Lower leg support (10) according to claim 1,
**characterized in that**
the first support element (30) has an in particular foldable table surface extension element (66).

3. Lower leg support (10) according to either claim 1 or claim 2,
**characterized in that**
the relevant movement element (22, 26) is formed from a guide element (38) connected to the relevant fixing element (16, 18) and a support arm (40) which is movable relative to the guide element (38), which support arm in each case comprises the relevant end (28, 34) on which the relevant support element (30, 36) is arranged.

4. Lower leg support (10) according to any of the preceding claims,
**characterized in that**
a first drive (42) is provided, by means of which the first support element (30) can be moved from the use position into the table position, and/or a second drive (44) is provided, by means of which the two support elements (30, 36) which are locked together can be moved between the use position and the non-use position.

5. Lower leg support (10) according to claims 3 and 4,
**characterized in that**
the second support arm (40) has a toothing (46) and/or a rack and/or a spindle (48), via which the movement between the use position and the non-use position can be carried out by means of the second drive (44).

6. Lower leg support (10) according to any of the preceding claims,
**characterized in that**
the first support element (30) has a first connecting surface (74) which is oriented congruently with a second connecting surface (76) of the second support element (36) while the two support elements (30, 36) are locked together, and/or the two connecting surfaces (74, 76) have an overlapping region by means of which the connecting surfaces (74, 76) touch when the first support element (30) is moved from the table position to the use position, and, as a result, the support elements (30, 36) can be moved toward one another to lock the locking device (32).

7. Lower leg support (10) according to any of the preceding claims,
**characterized in that**
the second support element (36) is wider than the first support element (30) and in particular is twice as wide.

8. Vehicle seat (12) comprising a lower leg support (10) according to any of the preceding claims, wherein the fixing elements (16, 18) are fixed to a floor connection of the vehicle seat (12), or the vehicle seat (12) has a length adjustment device (50) having length adjustment rails (52) and the first fixing element (16) is fixed to a first of the length adjustment rails (52) and the second fixing element (18) is fixed to a second of the length adjustment rails (52).

9. Motor vehicle (14) comprising a lower leg support (10) according to any of claims 1 to 7 and/or a vehicle seat (12) according to claim 8.

10. Motor vehicle (14) according to claim 9;
**characterized in that**
the first fixing element (16) is arranged on a side of the vehicle seat (12) facing away from a vehicle door.

## Revendications

1. Repose-jambes (10) pour un siège de véhicule (12), comportant un premier élément de fixation (16) et comportant un second élément de fixation (18), qui sont conçus pour la fixation du repose-jambes (10) sur des zones latérales opposées (20) du siège de véhicule (12), dans lequel un premier élément de déplacement (22) est relié de manière rotative au premier élément de fixation (16) et un second élément de déplacement (26) est relié de manière fixe au second élément de fixation (18),
dans lequel
au niveau d'une extrémité (28) du premier élément de déplacement (22) opposée au premier élément de fixation (16) dans une position d'utilisation, il est prévu un premier élément d'appui (30) maintenu sur celui-ci de manière rotative, lequel est verrouillable mutuellement à l'aide d'un dispositif de verrouillage (32) avec un second élément d'appui (36) disposé de manière rotative au niveau d'une extrémité (34) du second élément de déplacement (26) opposée au second élément de fixation (18) dans la position d'utilisation, dans lequel les deux éléments d'appui (30, 36) sont déplaçables de la position d'utilisation dans une position de non-utilisation à l'aide des éléments de déplacement (22, 26) et le premier élément d'appui (30), déverrouillé par le second élément d'appui (36), est transférable dans une position de table dans la position d'utilisation par rotation du premier élément de déplacement (22) par rapport au premier élément de fixation (16).

2. Repose-jambes (10) selon la revendication 1,
**caractérisé en ce que**
le premier élément d'appui (30) présente un élément d'extension de surface de table (66), en particulier rabattable.

3. Repose-jambes (10) selon la revendication 1 ou 2,
**caractérisé en ce que**
l'élément de déplacement (22, 26) respectif est conçu d'un élément de guidage (38) relié à l'élément de fixation (16, 18) respectif et d'un bras d'appui (40) déplaçable par rapport à l'élément de guidage (38), lequel présente respectivement l'extrémité (28, 34) respective sur laquelle est disposé l'élément d'appui (30, 36) respectif.

4. Repose-jambes (10) selon l'une des revendications précédentes,
**caractérisé en ce**
**qu'**un premier entraînement (42) est prévu, à l'aide duquel le premier élément d'appui (30) est déplaçable de la position d'utilisation à la position de table et/ou un second entraînement (44) est prévu, à l'aide duquel les deux éléments d'appui (30, 36) verrouillés ensemble sont déplaçables entre la position d'utilisation et la position de non-utilisation.

5. Repose-jambes (10) selon la revendication 3 et la revendication 4,
**caractérisé en ce que**
le second bras d'appui (40) présente une denture (46) et/ou une crémaillère et/ou une broche (48), par l'intermédiaire desquelles le déplacement entre la position d'utilisation et la position de non-utilisation est réalisable à l'aide du second entraînement (44).

6. Repose-jambes (10) selon l'une des revendications précédentes,
**caractérisé en ce que**
le premier élément d'appui (30) présente une première surface de liaison (74) laquelle est orientée de manière à coïncider avec une seconde surface de liaison (76) du second élément d'appui (36) pendant que les deux éléments d'appui (30, 36) sont verrouillés l'un à l'autre et/ou les deux surfaces de liaison (74, 76) présentent une zone de chevauchement par laquelle les surfaces de liaison (74, 76) se touchent lors du déplacement du premier élément d'appui (30), de la position de table à la position d'utilisation, et les éléments d'appui (30, 36) sont ainsi mobiles l'un vers l'autre pour le verrouillage du dispositif de verrouillage (32).

7. Repose-jambes (10) selon l'une des revendications précédentes,
**caractérisé en ce que**
le second élément d'appui (36) est plus large que le premier élément d'appui (30) et présente en particulier une largeur double.

8. Siège de véhicule (12) comprenant un repose-jambes (10) selon l'une des revendications précédentes, dans lequel les éléments de fixation (16, 18) sont fixés à une liaison au sol du siège de véhicule (12) ou le siège de véhicule (12) présente un dispositif de réglage de la longueur (50) comportant des rails de réglage de la longueur (52) et le premier élément de fixation (16) est fixé à un premier des rails de réglage de la longueur (52) et le second élément de fixation (18) est fixé à un second des rails de réglage de la longueur (52).

9. Véhicule automobile (14) comprenant un repose-jambes (10) selon l'une des revendications 1 à 7 et/ou un siège de véhicule (12) selon la revendication 8.

10. Véhicule automobile (14) selon la revendication 9 ;
**caractérisé en ce que**
le premier élément de fixation (16) est disposé sur un côté du siège de véhicule (12) opposé à une porte de véhicule.
